# FASCICULE DE BREVET EUROPEEN

(11) **EP 3 248 235 B1**
(45) Date de publication et mention de la délivrance du brevet: **20.03.2019**
(21) Numéro de dépôt: 16700355.7
(22) Date de dépôt: 12.01.2016
(51) Int. Cl.: H01M 8/04828, H01M 8/04537, H01M 8/04858

(54) **SYSTÈME ÉLECTRIQUE COMPRENANT UN EMPILEMENT DE CELLULES ÉLECTROCHIMIQUES ET PROCÉDÉ DE PILOTAGE DE CE SYSTÈME**
ELEKTRISCHES SYSTEM MIT EINEM STAPEL ELEKTROCHEMISCHER ZELLEN UND VERFAHREN ZUR STEUERUNG DIESES SYSTEMS
ELECTRICAL SYSTEM COMPRISING A STACK OF ELECTROCHEMICAL CELLS AND METHOD FOR CONTROLLING SAID SYSTEM

(30) Priorité: 19.01.2015 FR 1550410
(43) Date de publication de la demande: 29.11.2017
(73) Titulaire: Areva Stockage d'Energie, 13547 Aix en Provence Cedex 4 (FR)
(72) Inventeur: PHILIPPOTEAU, Vincent, 38950 Saint Martin Le Vinoux (FR); RAKOTONDRAINIBE, André, 13090 Aix En Provence (FR)
(74) Mandataire: Lavoix
(86) Numéro de dépôt international: PCT/EP2016/050473
(87) Numéro de publication internationale: WO 2016/116328

(56) Documents cités:
- EP-A1- 2 131 471
- EP-A1- 2 530 780
- US-A1- 2011 266 875
- US-B1- 6 428 917

## Description

La présente invention concerne un système électrique, du type comprenant :
- un empilement de cellules électrochimiques raccordées électriquement en série les unes aux autres, de sorte que la tension aux bornes de l'empilement est égale à la somme des tensions aux bornes des cellules électrochimiques,
- un convertisseur électrique raccordé électriquement aux bornes de l'empilement,
- un comparateur de tension pour comparer la tension aux bornes d'au moins un groupe d'au moins une cellule électrochimique de l'empilement à une tension seuil, et
- un module de commande du convertisseur.

L'invention concerne également un procédé de pilotage de ce système électrique.

On connaît des cellules électrochimiques permettant de produire de l'électricité par réaction d'oxydoréduction entre un fluide oxydant et un fluide réducteur. Notamment, on connaît les cellules de pile à combustible permettant de produire de l'électricité par réaction d'oxydoréduction entre un combustible, comprenant de l'hydrogène, et un comburant, comprenant de l'oxygène. Le combustible est injecté dans un conduit anodique et le comburant est injecté dans un conduit cathodique de la cellule, une couche d'électrolyte assurant l'étanchéité entre ces deux conduits, en permettant les échanges d'ions. En raison de ces échanges d'ions, l'hydrogène contenu dans le combustible peut réagir avec l'oxygène contenu dans le comburant pour donner de l'eau, en générant des électrons à l'anode. Il s'ensuit, lors du fonctionnement de la cellule, l'établissement d'une différence de potentiel entre les deux côtés de l'électrolyte, cette différence de potentiel pouvant être exploitée pour créer un courant électrique.

Cependant, les différences de potentiel s'établissant au sein d'une cellule de pile à combustible restent faibles, de l'ordre de 0,6 à 1,0V. Aussi, pour obtenir une tension de sortie exploitable, les cellules sont le plus souvent empilées et raccordées électriquement en série les unes autres, au sein de ce qui est couramment appelé une pile à combustible.

La pile à combustible est généralement raccordée électriquement à un convertisseur électrique permettant de mettre en forme le courant sortant de la pile à combustible pour sa consommation par une charge. Le convertisseur électrique est piloté par un module de commande qui agit sur le convertisseur pour que le courant sortant du convertisseur soit adapté à la charge. Le module de commande ajuste typiquement la tension du courant de sortie et, lorsque le courant de sortie est un courant alternatif, la fréquence du courant de sortie.

Le plus souvent, la pile à combustible est équipée d'un module d'arrêt d'urgence pour arrêter la pile en cas de dysfonctionnement, par exemple en cas de perte d'étanchéité de la couche d'électrolyte de l'une des cellules. Le module d'arrêt d'urgence est généralement associé à une unité mesurant la tension aux bornes des cellules de la pile pour détecter ledit dysfonctionnement.

Un problème couramment rencontré sur les piles à combustible connues est que l'arrêt d'urgence s'enclenche intempestivement en raison d'une puissance électrique trop importante prélevée sur la pile. Cela se produit en particulier lorsque la pile est froide et que la puissance demandée augmente brusquement, ou lorsque la pile est vieille et a des performances limitées.

US 6 428 917 propose de réguler le courant de sortie maximal sortant de la pile combustible. A cet effet, US 6 428 917 propose un système de production d'énergie électrique à pile à combustible comprenant un module de commande programmé pour déduire un courant de sortie maximal en sortie de la pile à combustible à partir de la comparaison entre la tension de cellule la plus basse et une tension seuil, et pour transmettre au convertisseur électrique une consigne représentative dudit courant maximal.

Toutefois, ce système de production nécessite des calculateurs effectuant des opérations complexes. En conséquence, le système de production est difficile à réaliser et coûteux. En outre, le module de commande est peu adapté pour des piles à combustible présentant un grand nombre de cellules électrochimiques, par exemple supérieur à cent.

On connaît également des cellules électrochimiques permettant de produire un fluide oxydant et un fluide réducteur par électrolyse d'un fluide tiers. Notamment, on connaît les cellules d'électrolyse de l'eau permettant de produire de l'hydrogène et de l'oxygène. L'eau est injectée dans un conduit anodique ou cathodique de la cellule, une couche d'électrolyte assurant l'étanchéité entre ces deux conduits, en permettant les échanges d'ions. Sous l'influence d'une différence de potentiel électrique appliquée entre les deux conduits, l'eau se décompose en ions hydrogène positifs et en ions oxygène négatifs, les ions d'un même signe migrant à travers la couche d'électrolyte vers l'autre conduit de la cellule. Les ions oxygène sont ainsi séparés des ions hydrogène. Les ions oxygène cèdent ensuite des électrons et se convertissent ainsi en dioxygène, alors que les ions hydrogène reçoivent des électrons et se convertissent ainsi en dihydrogène.

Les cellules d'électrolyse sont le plus souvent empilées et raccordées électriquement en série les unes autres, au sein de ce qui est couramment appelé un électrolyseur.

L'électrolyseur est généralement raccordé électriquement à un convertisseur électrique permettant de mettre en forme un courant d'alimentation de l'électrolyseur fourni par une source électrique. Le convertisseur électrique est piloté par un module de commande qui agit sur le convertisseur pour que le courant sortant du convertisseur soit adapté à l'électrolyseur. Le module de commande ajuste typiquement la tension du courant d'alimentation.

Le plus souvent, l'électrolyseur est équipé d'un module d'arrêt d'urgence pour arrêter l'électrolyseur en cas de dysfonctionnement, par exemple en cas de surtension aux bornes de l'une des cellules. Le module d'arrêt d'urgence est généralement associé à une unité mesurant la tension aux bornes des cellules de l'électrolyseur pour détecter ledit dysfonctionnement.

Les unités de mesure connues sont toutefois peu adaptées pour mesurer les tensions aux bornes des cellules de grands électrolyseurs comprenant typiquement plus de cent cellules électrochimiques.

Un objectif de l'invention est d'éviter les arrêts de sécurité intempestifs. D'autres objectifs sont d'augmenter la longévité des empilements de cellules électrochimiques, et de proposer un système simple et peu coûteux.

A cet effet, l'invention a pour objet un système électrique du type précité, dans lequel le module de commande comprend un générateur d'une consigne de pilotage du convertisseur et un organe de transmission de la consigne de pilotage au convertisseur, le comparateur de tension étant adapté pour transmettre un signal à l'organe de transmission, ledit signal consistant en une première consigne parmi une consigne de transmission et une consigne de blocage de la consigne de pilotage lorsque la tension comparée est supérieure à la tension seuil, et en une deuxième consigne parmi les consignes de transmission et de blocage de la consigne de pilotage lorsque la tension comparée est inférieure ou égale à la tension seuil, l'organe de transmission étant adapté pour transmettre la consigne de pilotage au convertisseur lorsqu'il reçoit la consigne de transmission, et pour bloquer la consigne de pilotage lorsqu'il reçoit la consigne de blocage.

Selon des modes particuliers de réalisation de l'invention, le système électrique comprend également l'une ou plusieurs des caractéristiques suivantes, prise(s) isolément ou suivant toute(s) combinaison(s) techniquement possible(s) :
- chaque cellule électrochimique de l'empilement appartient à un groupe dont la tension est comparée à une tension seuil par le comparateur de tension ;
- le comparateur de tension est adapté pour comparer la tension aux bornes de chaque groupe d'une pluralité de groupes d'au moins une cellule électrochimique à une tension seuil associée audit groupe, et pour transmettre à l'organe de transmission la deuxième consigne dès que l'une des tensions comparées est inférieure ou égale à la tension seuil associée ;
- la tension seuil associée à chaque groupe est sensiblement égale à la tension seuil associée à chaque autre groupe ;
- l'organe de transmission comprend un interrupteur commandé piloté par le signal transmis par le comparateur de tension, l'interrupteur commandé étant en particulier un transistor, par exemple un phototransistor ou un transistor à effet de champ à grille métal-oxyde ;
- le comparateur de tension est adapté pour comparer individuellement la tension aux bornes de chaque cellule électrochimique de l'empilement à une tension seuil associée à la cellule électrochimique, et pour transmettre à l'organe de transmission la deuxième consigne dès que l'une des tensions comparées est inférieure ou égale à la tension seuil associée ;
- la tension seuil associée à chaque cellule est sensiblement égale à la tension seuil associée à chaque autre cellule ;
- le comparateur de tension comprend, pour chaque cellule électrochimique de l'empilement, un dispositif de contrôle de la tension aux bornes de ladite cellule, et un dispositif régulateur de tension, raccordé électriquement à ladite cellule de façon à ce que le dispositif de contrôle mesure la tension aux bornes de la cellule, abaissée d'une tension de décalage aux bornes du dispositif régulateur ;
- le comparateur de tension comprend, pour chaque cellule électrochimique de l'empilement, un dispositif de contrôle de la tension aux bornes de ladite cellule, et un dispositif régulateur de tension, raccordé électriquement à ladite cellule de façon à ce que le dispositif de contrôle mesure la tension aux bornes de la cellule, augmentée d'une tension de décalage aux bornes du dispositif régulateur ;
- la tension de décalage est fixe ;
- le dispositif régulateur est un dispositif passif, tel qu'une diode ;
- le dispositif régulateur est raccordé électriquement, par une première borne, à une borne d'une cellule consécutive de la pile, commune avec la cellule dont est mesurée la tension, et, par une deuxième borne, à l'autre borne de ladite cellule consécutive ;
- la première borne du dispositif régulateur est en liaison électrique directe avec la borne commune à la cellule dont est mesurée la tension et à la cellule consécutive ;
- une résistance est intercalée électriquement entre la deuxième borne du dispositif régulateur et la borne de la cellule consécutive à laquelle est raccordée ladite deuxième borne ;
- le dispositif de contrôle comprend une entrée raccordée d'une part à une borne de la cellule dont est mesurée la tension, et d'autre part à la deuxième borne du dispositif régulateur ;
- le dispositif de contrôle est un élément optique actif ;
- le dispositif de contrôle comprend une sortie pour la construction d'une image de la tension mesurée, les sorties d'au moins deux des dispositifs de contrôle étant raccordées électriquement en série les unes aux autres ;
- le système électrique comprend un capteur de tension pour mesurer la tension aux bornes de l'empilement et un module de détection d'un dysfonctionnement de l'empilement, le module de détection ayant pour entrées la tension mesurée par le capteur de tension et le signal transmis par le comparateur de tension à l'organe de transmission ;
- le module de détection est programmé pour comparer la tension mesurée à une tension maximale, et pour émettre un signal de dysfonctionnement de l'empilement lorsque la tension mesurée est supérieure à la tension maximale et le signal transmis par le comparateur de tension à l'organe de transmission consiste en la consigne de blocage ;
- le système électrique comprend un capteur de courant pour mesurer l'intensité du courant sortant de l'empilement et un module de détection d'un dysfonctionnement de l'empilement, le module de détection ayant pour entrées l'intensité mesurée par le capteur de courant et le signal transmis par le comparateur de tension à l'organe de transmission ;
- le module de détection est programmé pour comparer l'intensité mesurée à une intensité minimale, et pour émettre un signal de dysfonctionnement de l'empilement lorsque l'intensité mesurée est inférieure à l'intensité minimale et le signal transmis par le comparateur de tension à l'organe de transmission consiste en la consigne de blocage.

L'invention a également pour objet un procédé de pilotage d'un système électrique tel que défini ci-dessus, comprenant les étapes suivantes :
- comparaison de la tension aux bornes d'au moins un groupe d'au moins une cellule électrochimique avec une tension seuil, la tension comparée étant supérieure à la tension seuil, le convertisseur étant en fonctionnement,
- détection de la baisse de la tension comparée à une valeur inférieure à celle de la tension seuil,
- arrêt du convertisseur,
- détection de l'augmentation de la tension comparée à une valeur supérieure à celle de la tension seuil, et
- remise en marche du convertisseur.

L'invention a également pour objet un procédé de pilotage d'un système électrique tel que défini ci-dessus, comprenant les étapes suivantes :
- comparaison de la tension aux bornes d'au moins un groupe d'au moins une cellule électrochimique avec une tension seuil, la tension comparée étant inférieure à la tension seuil, le convertisseur étant en fonctionnement,
- détection de la hausse de la tension comparée à une valeur supérieure à celle de la tension seuil,
- arrêt du convertisseur,
- détection de la baisse de la tension comparée à une valeur inférieure à celle de la tension seuil, et
- remise en marche du convertisseur.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique d'un système électrique selon un premier mode de réalisation de l'invention, raccordé électriquement à une charge,
- la Figure 2 est une vue schématique en coupe d'une cellule électrochimique d'une pile du système électrique de la Figure 1,
- la Figure 3 est une vue schématique d'un détail d'un comparateur de tension du système électrique de la Figure 1, selon une première variante du premier mode de réalisation,
- la Figure 4 est une vue similaire à celle de la Figure 3, selon une deuxième variante du premier mode de réalisation,
- la Figure 5 est une vue schématique du comparateur de tension du système électrique de la Figure 1,
- la Figure 6 est une vue schématique d'une variante du système électrique de la Figure 1, et
- la Figure 7 est une vue schématique d'un système électrique selon un deuxième mode de réalisation de l'invention, raccordé électriquement à une source,
- la Figure 8 est une vue schématique en coupe d'une cellule électrochimique d'un électrolyseur du système électrique de la Figure 7,
- la Figure 9 est une vue schématique d'un détail d'un comparateur de tension du système électrique de la Figure 7, et
- la Figure 10 est une vue schématique du comparateur de tension du système électrique de la Figure 7.

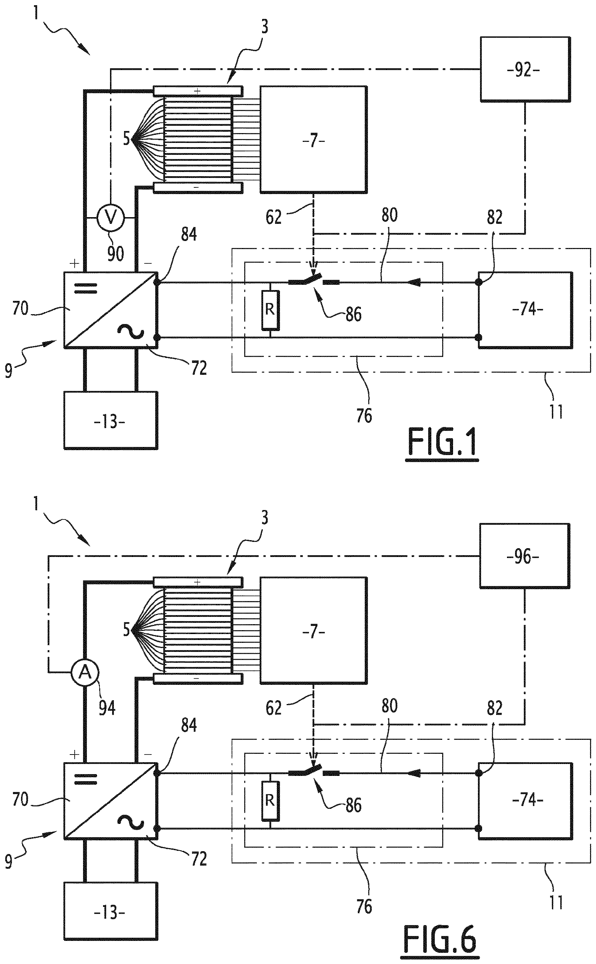

Le système électrique 1, représenté sur la Figure 1, est un système de production d'énergie électrique. Il comprend une pile à combustible formée par un empilement 3 de cellules électrochimiques 5, pour la génération d'un courant électrique à partir d'un fluide oxydant et d'un fluide réducteur, un comparateur de tension 7 pour comparer individuellement la tension aux bornes de chaque cellule 5 de la pile à combustible 3 à une tension seuil, un convertisseur électrique 9 pour la conversion du courant électrique généré par la pile à combustible 3, et un module 11 de commande du convertisseur 9. Le système électrique 1 est raccordé électriquement à une charge 13 pour la consommation de l'énergie électrique produite par le système 1.

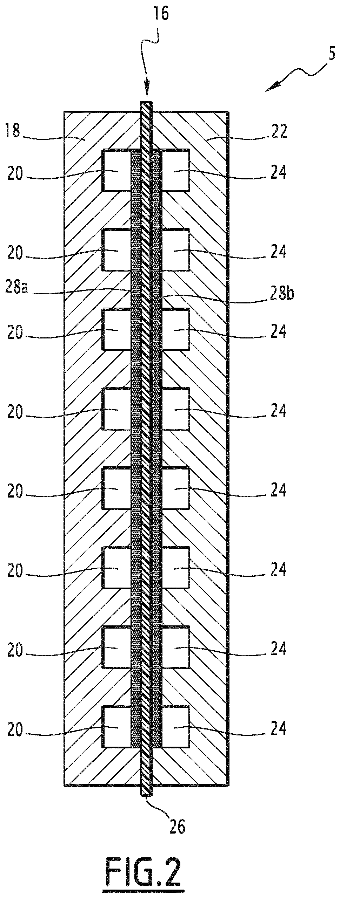

Une cellule 5 de la pile à combustible 3 est représentée sur la Figure 2. Elle comprend un assemblage membrane-électrode 16 intercalé entre une plaque anodique 18 et une plaque cathodique 22.

L'assemblage membrane-électrode 16 comprend une membrane 26 d'échange d'ions prise en sandwich entre une anode 28a et une cathode 28b.

La membrane 26 isole électriquement l'anode 28a de la cathode 28b.

La membrane 26 est adaptée pour ne laisser que des ions chargés, de préférence des cations, la traverser. La membrane 26 est généralement une membrane d'échange de protons, adaptée pour ne laisser que des protons la traverser. La membrane 26 est typiquement en matériau polymère.

L'anode 28a et la cathode 28b comprennent chacune un catalyseur, typiquement du platine ou un alliage de platine, pour faciliter la réaction.

La plaque anodique 18 délimite un conduit anodique 20 pour la circulation d'un gaz réducteur le long de l'anode 28a et en contact avec celle-ci. Pour ce faire, la plaque 18 est munie d'au moins un canal ménagé dans la face de la plaque tournée vers l'assemblage membrane-électrode 16 et refermé par ledit assemblage membrane électrode 16. La plaque anodique 18 est formée d'un matériau conducteur électriquement, typiquement du graphite. Le gaz réducteur utilisé est un gaz comprenant du dihydrogène, comme par exemple du dihydrogène pur.

La plaque cathodique 22 délimite un conduit cathodique 24 pour la circulation d'un gaz oxydant le long de la cathode 28b et en contact avec celle-ci. Pour ce faire, la plaque 22 est munie d'au moins un canal ménagé dans la face de la plaque tournée vers l'assemblage membrane-électrode 16 et refermé par ledit assemblage membrane électrode 16. La plaque cathodique 22 est formée d'un matériau conducteur électriquement, typiquement du graphite. Le gaz oxydant utilisé est un gaz comprenant du dioxygène, comme par exemple du dioxygène pur, de l'air, ou un mélange reconstitué de dioxygène et d'un gaz neutre, tel que de l'azote ou du dioxyde de carbone.

La membrane 26 sépare les gaz oxydant et réducteur. Elle est disposée entre la plaque anodique 18 et la plaque cathodique 22 de la cellule 5 et isole celles-ci électriquement l'une de l'autre.

L'anode 28a est en contact électrique avec la plaque anodique 18. La cathode 28b est en contact électrique avec la plaque cathodique 22. Lors du fonctionnement de la pile à combustible, il se produit au niveau de l'anode 28a une oxydation du gaz réducteur induisant la génération d'électrons et de protons. Les électrons transitent ensuite via la plaque anodique 18 vers la cathode 28b de la cellule 5, ou vers la cathode d'une autre cellule, pour participer à une réduction du gaz oxydant.

La cellule 5 comprend ainsi deux bornes électriques : une borne électrique négative est constituée par la plaque anodique 18, et une borne électrique positive est constituée par la plaque cathodique 20.

La cellule 5 est empilée avec d'autres cellules similaires, la plaque anodique 18 de chaque cellule étant en contact avec la plaque cathodique 22 de la cellule voisine. Les plaques anodique et cathodique 18, 22 assurent ainsi le transfert des électrons du gaz réducteur circulant dans une cellule vers le gaz oxydant circulant dans une autre cellule. Les plaques anodique 18 et cathodique 22 de deux cellules voisines de l'empilement sont de préférence venues de matière et forment ensemble une plaque bipolaire.

Les cellules 5 sont raccordées électriquement en série les unes aux autres, de sorte que la tension aux bornes de l'empilement 3 est égale à la somme des tensions aux bornes des cellules 5.

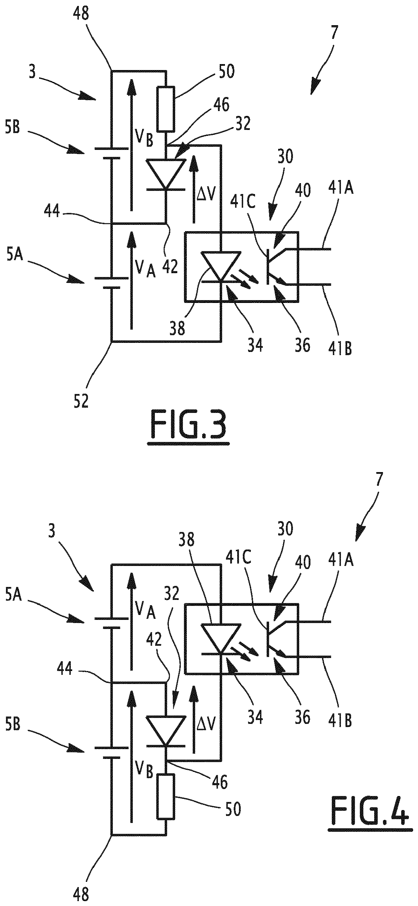

En référence aux Figures 3 et 4, le comparateur de tension 7 comprend, pour chaque cellule 5A de la pile 3, un dispositif 30 de contrôle de la tension aux bornes de ladite cellule 5A. Il comprend en outre dispositif 32 régulateur de tension, agencé de façon à ce que le dispositif de contrôle 30 mesure la tension V_{A} aux bornes de la cellule 5A, augmentée d'une tension de décalage ΔV fixe.

La tension V_{A} est typiquement comprise entre 0,5 et 1,0V, en fonctionnement normal de la cellule 5A. La tension de décalage ΔV est la tension aux bornes du dispositif régulateur 32. De préférence, la tension de décalage ΔV est sensiblement égale 0,3V.

Le dispositif de contrôle 30 est constitué par un dispositif optique actif, typiquement un optocoupleur. Il comprend une entrée 34, raccordée électriquement à la cellule 5A, pour la mesure de sa tension V_{A}, et une sortie 36, pour la construction d'une image de la tension mesurée V_{A}. L'entrée 34 et la sortie 36 sont isolées électriquement.

L'entrée 34 comprend une diode électroluminescente 38, adaptée pour émettre des photons lorsque la tension à ses bornes est supérieure à une tension seuil Vₘᵢₙ. En fonctionnement normal de la cellule 5A, la tension seuil Vₘᵢₙ est inférieure à la somme des tensions V_{A} et ΔV, de sorte que la diode électroluminescente 38 émet des photons. La tension seuil Vₘᵢₙ est typiquement comprise entre 0,8 et 1,2V.

La sortie 36 comprend un phototransistor 40 adapté pour être en configuration fermée, c'est-à-dire raccordant électriquement son collecteur 41A et son émetteur 41B l'un à l'autre, lorsque sa base 41C reçoit des photons, et pour être en configuration ouverte, c'est-à-dire isolant électriquement son collecteur 41A et son émetteur 41B l'un de l'autre, lorsque sa base 41C ne reçoit pas de photons.

Le phototransistor 40 est couplé optiquement à la diode électroluminescente 38. En d'autres termes, la diode électroluminescente 38 et le phototransistor 40 sont agencés de façon à ce que les photons émis par la diode 38 parviennent à la base 41C du phototransistor 40. Le passage du phototransistor 40 de sa configuration ouverte à sa configuration fermée est ainsi commandé par l'état de la diode électroluminescente 38.

Le dispositif régulateur 32 est un dispositif électrique passif. En particulier, le dispositif régulateur 32 est une diode, typiquement une diode Schottky, avantageuse parce que peu coûteuse et donnant une tension de décalage fixe et facilement maîtrisable. La diode est orientée de manière à laisser passer les courants des zones de potentiel haut aux zones de potentiel inférieur. Ainsi, en fonctionnement normal, la tension aux bornes du dispositif régulateur 32, qui est également la tension de décalage ΔV, est égale à la tension seuil de la diode.

Le dispositif régulateur 32 comprend une première borne 42, raccordée électriquement à une borne 44 d'une cellule 5B de l'empilement consécutive à la cellule 5A. En d'autres termes, la première borne 42 est raccordée à la plaque bipolaire formant la séparation entre les cellules 5A et 5B. La première borne 42 est en liaison électrique directe avec la borne 44 commune aux cellules 5A, 5B, c'est-à-dire qu'il n'y a pas de composant électrique interposé les bornes 42 et 44.

Le dispositif régulateur 32 comprend également une deuxième borne 46, raccordée électriquement à l'autre borne 48 de la cellule consécutive 5B. En d'autres termes, la deuxième borne 46 est raccordée électriquement à la plaque 18, 22 de la cellule 5B opposée à la face de contact de la cellule 5B avec la cellule 5A. Une résistance 50 est intercalée entre la deuxième borne 46 et la borne 48, pour limiter l'intensité du courant traversant le dispositif régulateur 32.

L'entrée 34 du dispositif de contrôle 30 est raccordée d'une part à la deuxième borne 46 du dispositif régulateur 32, et d'autre part à la borne 52 de la cellule 5A autre que la borne commune 44.

Dans l'exemple représenté sur la Figure 3, la borne commune 44 est la borne de la cellule 5A ayant le potentiel le plus élevé. La cellule consécutive 5B est alors une cellule supérieure de l'empilement. Le dispositif régulateur 32 est orienté de façon à ce que sa borne 42 soit sa borne de potentiel le plus faible. Ainsi, la tension aux bornes de l'entrée 34 est égale à la somme des tensions V_{A} et ΔV.

Dans l'exemple représenté sur la Figure 4, la borne commune 44 est la borne de la cellule 5A ayant le potentiel le plus faible. La cellule consécutive 5B est alors une cellule inférieure de l'empilement. Le dispositif régulateur 32 est orienté de façon à ce que sa borne 42 soit sa borne de potentiel le plus élevé. Ainsi, la tension aux bornes de l'entrée 34 est égale à la somme des tensions V_{A} et ΔV.

Le dispositif de contrôle 30 mesurant ainsi la tension V_{A} de la cellule 5A augmentée de la tension de décalage ΔV, la tension V_{A} peut varier sur une plage plus large avant que la tension aux bornes de l'entrée 34 du dispositif de contrôle 30 ne passe sous la tension seuil Vₘᵢₙ.

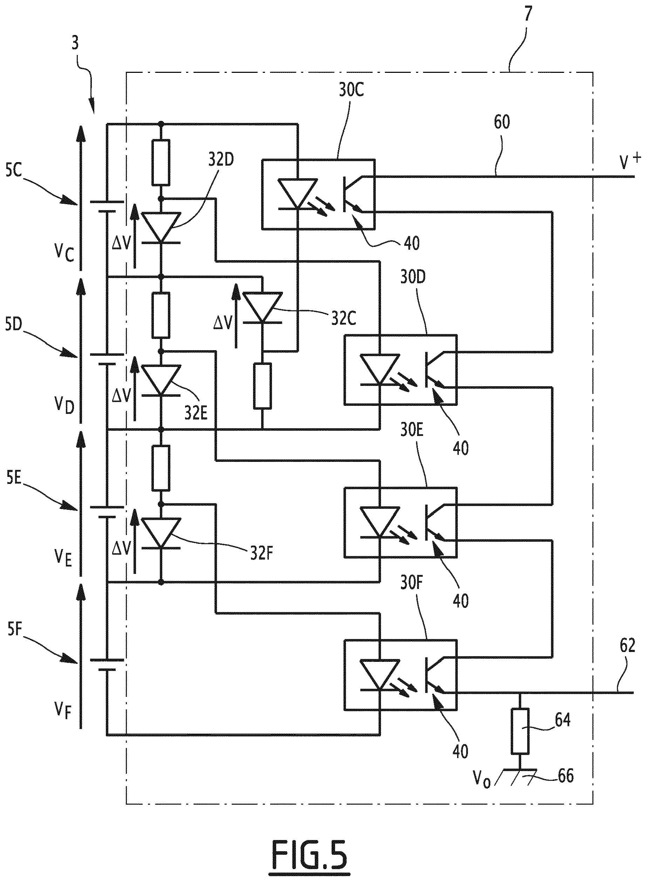

En référence à la Figure 5, les tensions V_{C}, V_{D}, V_{E}, V_{F} aux bornes des cellules 5C, 5D, 5E, 5F de la pile à combustible 3 sont chacune mesurée par un dispositif de contrôle, respectivement 30C, 30D, 30E, 30F du comparateur de tension 7. De même que pour la cellule 5A représentée sur les Figures 3 et 4, un dispositif régulateur, respectivement 32C, 32D, 32E, 32F, est fourni pour chaque cellule 5C, 5D, 5E, 5F, de façon à ce que le dispositif de contrôle 30C, 30D, 30E, 30F associé mesure la tension V_{C}, V_{D}, V_{E}, V_{F} augmentée d'une tension de décalage ΔV.

On notera que, pour des raisons de clarté de la Figure, le nombre de cellules de la pile à combustible 3 représentées à été limité à quatre, mais que ce nombre est nullement limitatif, la pile 3 pouvant comprendre plus ou moins de quatre cellules électrochimiques. De préférence, la pile 3 comprend un grand nombre de cellules électrochimiques, par exemple supérieure à cent.

La tension seuil Vₘᵢₙ est de préférence sensiblement la même pour tous les dispositifs de contrôle 30C, 30D, 30E, 30F, et la tension de décalage ΔV est de préférence sensiblement la même pour tous les dispositifs régulateurs 32C, 32D, 32E, 32F. La tension minimale de chaque cellule 5C, 5D, 5E, 5F en deçà de laquelle le phototransistor 40 associé s'ouvre est donc sensiblement la même pour toutes les cellules 5C, 5D, 5E, 5F.

Pour chacune des cellules 5D, 5E, 5F, la cellule consécutive aux bornes de laquelle est raccordé le dispositif régulateur 32D, 32E, 32F est constituée par la cellule consécutive supérieure, respectivement 5C, 5D, 5E. Pour la cellule 5C, la cellule consécutive aux bornes de laquelle est raccordé le dispositif régulateur 32C est constituée par la cellule consécutive inférieure 5D.

Les sorties 36 des dispositifs de contrôle 30C, 30D, 30E, 30F sont raccordées en série les unes aux autres, entre une ligne 60 de potentiel positif V⁺ (typiquement 5 volts) et une ligne de sortie 62. Une résistance 64 est interposée électriquement entre la ligne 62 et une ligne 66 de potentiel de référence V₀.

Ainsi, tant que tous les phototransistors 40 des dispositifs de contrôle 30C, 30D, 30E, 30F sont fermés, le potentiel de la ligne de sortie 62 est égal au potentiel positif V⁺. Si en revanche le potentiel de la ligne de sortie 62 passe au potentiel de référence V₀, c'est le signe que l'un des phototransistors 40 s'est ouvert, et donc qu'une puissance excessive est tirée de la pile 3.

De retour à la Figure 1, le convertisseur 9 est adapté pour mettre l'énergie électrique produite par le système 1 en forme pour sa consommation par la charge 13. Il comprend une entrée 70 de courant continu raccordée électriquement aux bornes de la pile 3, et une sortie 72 de courant mis en forme raccordée électriquement aux bornes de la charge 13. Le convertisseur 9 est dans l'exemple représenté un convertisseur continu/alternatif. En variante, le convertisseur 9 est un convertisseur continu/continu.

Le convertisseur 9 est piloté par le module de commande 11.

Le module de commande 11 comprend un générateur de consigne de pilotage 74 et un organe 76 de transmission de la consigne de pilotage au convertisseur 9.

Le générateur de consigne de pilotage 74 est programmé pour générer une consigne de pilotage du convertisseur 9, par exemple de type à modulation de largeur d'impulsion, adaptée pour que le courant sortant du convertisseur 9 par sa sortie 72 soit adapté à la charge 13. De tels générateurs de consigne de pilotage sont connus de l'homme du métier.

L'organe de transmission 76 comprend une ligne électrique 80 raccordant électriquement une borne 82 de sortie de la consigne de pilotage du générateur 74 à une borne 84 de réception de la consigne de pilotage par le convertisseur 9. L'organe de transmission 76 comprend en outre un interrupteur commandé 86 pour sélectivement ouvrir et fermer la ligne électrique 80. L'interrupteur commandé 86 est typiquement un transistor, par exemple un phototransistor ou un transistor à effet de champ à grille métal-oxyde.

Le comparateur de tension 7 est adapté pour transmettre un signal de commande de l'interrupteur commandé 86 à l'organe de transmission 76, ledit signal consistant en une consigne de transmission de la consigne de pilotage lorsque la tension aux bornes de chaque cellule 5 est supérieure à la tension Vₘᵢₙ-ΔV, et en une consigne de blocage de la consigne de pilotage dès que l'une des tensions aux bornes des cellules 5 est inférieure ou égale à la tension Vₘᵢₙ-ΔV, de sorte que l'organe de transmission 76 transmette la consigne de pilotage au convertisseur 9 lorsqu'il reçoit la consigne de transmission, et bloque la consigne de pilotage lorsqu'il reçoit la consigne de blocage.

A cet effet, la sortie 62 du comparateur de tension 7 est raccordée électriquement à l'organe de transmission 76.

En particulier, dans le cas où l'interrupteur commandé 86 est un transistor à effet de champ à grille métal-oxyde, la sortie 62 du comparateur de tension 7 est raccordée électriquement à la grille du transistor. Dans le cas où l'interrupteur commandé 86 est un phototransistor, la sortie 62 est raccordée électriquement à une diode électroluminescente (non représentée) adaptée pour émettre des photons lorsque la tension à ses bornes est supérieure à une tension seuil inférieure au potentiel positif V⁺, la diode électroluminescente étant couplée optiquement au phototransistor.

Ainsi, lorsque la sortie 62 est au potentiel positif V⁺, l'interrupteur 86 est fermé et la consigne de pilotage est transmise au convertisseur 9 et, lorsque la sortie 62 est au potentiel de référence V₀, l'interrupteur 86 est ouvert et la consigne de pilotage n'est pas transmise au convertisseur 9.

Le signal transmis par la sortie 62 à l'organe de transmission 76 consiste donc en une alternance de créneaux au potentiel positif V⁺ et de créneaux au potentiel de référence V₀, chaque créneau au potentiel positif V⁺ constituant une consigne de transmission de la consigne de pilotage, et chaque créneau au potentiel de référence V₀ constituant une consigne de blocage de la consigne de pilotage.

La charge 13 est par exemple un moteur ou un réseau électrique.

Dans la variante représentée sur la Figure 1, le système électrique 1 comprend en outre un capteur de tension 90, pour mesurer la tension aux bornes de la pile à combustible 3, et un module 92 de détection d'un dysfonctionnement de la pile à combustible 3.

Le module de détection 92 a pour entrées la tension mesurée par le capteur de tension 90 et le signal transmis par le comparateur de tension 7 à l'organe de transmission 76. Il est programmé pour comparer la tension mesurée à une tension maximale, et pour émettre un signal de dysfonctionnement de la pile 3 lorsque la tension mesurée est supérieure à la tension maximale et le signal transmis par le comparateur de tension 7 à l'organe de transmission 76 consiste en la consigne de blocage. Ce signal de dysfonctionnement est typiquement transmis à un module d'arrêt d'urgence (non représenté), adapté pour commander l'arrêt du système électrique 1 suite à la réception du signal de dysfonctionnement, ou à dispositif de présentation d'informations (non représenté) pour informer un utilisateur du dysfonctionnement.

Dans la variante représentée sur la Figure 6, le système électrique 1 comprend un capteur de courant 94, pour mesurer l'intensité d'un courant sortant de la pile à combustible 3, et un module 96 de détection d'un dysfonctionnement de la pile à combustible 3.

Le module de détection 96 a pour entrées l'intensité mesurée par le capteur de courant 94 et le signal transmis par le comparateur de tension 7 à l'organe de transmission 76. Il est programmé pour comparer l'intensité mesurée à une intensité minimale, et pour émettre un signal de dysfonctionnement de la pile 3 lorsque l'intensité mesurée est inférieure à l'intensité minimale et le signal transmis par le comparateur de tension 7 à l'organe de transmission 76 consiste en la consigne de blocage. Ce signal de dysfonctionnement est typiquement transmis à un module d'arrêt d'urgence (non représenté), adapté pour commander l'arrêt du système électrique 1 suite à la réception du signal de dysfonctionnement, ou à dispositif de présentation d'informations (non représenté) pour informer un utilisateur du dysfonctionnement.

Un procédé de pilotage du système électrique 1 va maintenant être décrit, en référence aux Figures 1 et 6.

Le système électrique 1 est tout d'abord mis en fonctionnement. A cet effet, la pile à combustible 3 est alimentée en fluides oxydant et réducteur, et une consigne de pilotage est générée par le générateur de consigne 74 pour que le courant de sortie du convertisseur 9 soit adapté à la charge 13. Sous l'effet de la réaction d'oxydoréduction se produisant dans chaque cellule 5 de la pile 3, une différence de potentiel supérieure à Vₘᵢₙ-ΔV s'établit entre les bornes de la cellule. Tous les phototransistors 36 du comparateur de tension 7 sont alors fermés, de sorte que le signal de sortie du comparateur de tension 7 consiste en la consigne de transmission. L'interrupteur 86 est donc également fermé, de sorte que la consigne de pilotage est transmise au convertisseur 9, qui est ainsi en fonctionnement.

A un instant quelconque, la tension aux bornes de l'une des cellules 5 de la pile 3 passe en-dessous de la valeur Vₘᵢₙ-ΔV. Cette baisse de tension est détectée grâce à l'ouverture du phototransistor 40 associé à ladite cellule 5, ce qui a pour effet de basculer la sortie 62 du comparateur de tension 7 au potentiel de référence V₀. Le signal de sortie du comparateur de tension 7 consiste alors en la consigne de blocage. En conséquence, l'interrupteur 86 s'ouvre, et la consigne de pilotage cesse d'être transmise au convertisseur 9, qui s'arrête.

Le convertisseur 9 étant arrêté, il n'y a plus d'énergie prélevée sur la pile 3. Celle-ci continuant néanmoins d'être alimentée en fluides oxydant et réducteur, la tension aux bornes des cellules 5 remonte de sorte que toutes les valeurs de tension reviennent au-dessus de la valeur Vₘᵢₙ-ΔV. Cette hausse de tension est détectée grâce à la fermeture du phototransistor 40 qui s'était ouvert, ce qui a pour effet de faire revenir la sortie 62 du comparateur de tension 7 au potentiel positif V⁺. L'interrupteur 86 se referme également, et la consigne de pilotage est à nouveau transmise au convertisseur 9, qui redémarre.

On notera que les tensions aux bornes des cellules 5 sont susceptibles de remonter très rapidement après l'arrêt du convertisseur 9, de sorte que l'arrêt du convertisseur 9 ne dure généralement qu'une fraction de seconde. La charge 13 ne voit ainsi pas de coupure de son alimentation électrique par le système électrique 1, mais simplement une limitation de la puissance électrique que le système électrique 1 est susceptible de lui fournir.

Grâce à l'invention décrite ci-dessus, les arrêts de sécurité intempestifs du système électrique 1 sont évités. La puissance électrique distribuée par le système électrique 1 est simplement limitée en fonction des performances de la pile à combustible 3.

En outre, la pile à combustible 3 peut être exploitée au maximum de ses capacités, sans jamais entrer dans une zone de fonctionnement dans laquelle la dégradation des cellules électrochimiques 5 serait accélérée. Il est même tiré parti des capacités limités de la pile à combustible 3 en fin de vie, alors que ces capacités limitées occasionnaient dans les systèmes de production de l'état de la technique de multiples arrêts intempestifs rendant la pile inexploitable.

De plus, le système électrique 1 est simple et peu coûteux à produire.

Enfin, malgré une utilisation différente du comparateur de tension 7 par rapport aux systèmes de production de l'état de la technique, les dysfonctionnements de la pile 3 restent surveillés, ce qui permet quand même d'arrêter le système électrique 1 lorsque cela est nécessaire.

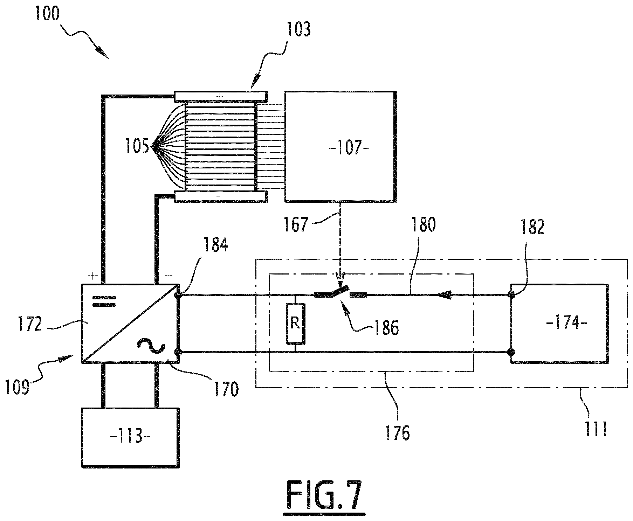

Le système électrique 100, représenté sur la Figure 7, est un système d'électrolyse. Il comprend un électrolyseur formé par un empilement 103 de cellules électrochimiques 105, pour la production de dioxygène et de dihydrogène par électrolyse de l'eau, un comparateur de tension 107 pour comparer individuellement la tension aux bornes de chaque cellule 105 de l'électrolyseur 103 à une tension seuil, un convertisseur électrique 109 pour la conversion du courant électrique d'alimentation de l'électrolyseur 103, et un module 111 de commande du convertisseur 109. Le système électrique 100 est raccordé électriquement à une source 113 pour la production de l'énergie électrique consommée par le système 100.

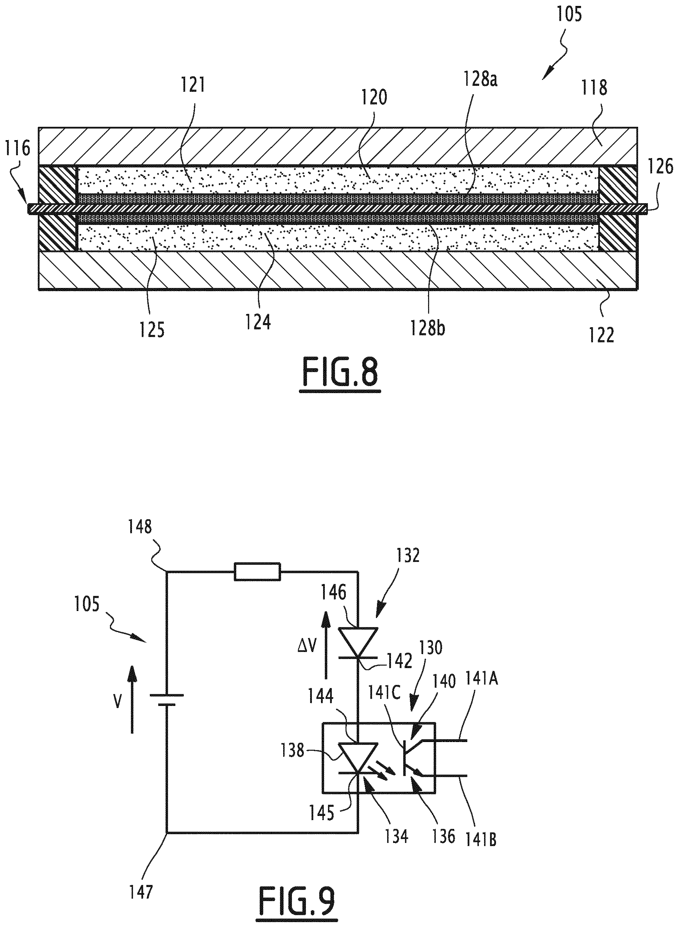

Une cellule 105 de l'électrolyseur 103 est représentée sur la Figure 8. Elle comprend un assemblage membrane-électrode 116 intercalé entre une plaque anodique 118 et une plaque cathodique 122.

L'assemblage membrane-électrode 116 comprend une membrane 126 d'échange d'ions prise en sandwich entre une anode 128a et une cathode 128b.

La membrane 126 isole électriquement l'anode 128a de la cathode 128b.

La membrane 126 est adaptée pour ne laisser que des ions chargés, de préférence des cations, la traverser. La membrane 126 est généralement une membrane d'échange de protons, adaptée pour ne laisser que des protons la traverser. La membrane 126 est typiquement en matériau polymère.

L'anode 128a et la cathode 128b sont disposées sur des faces opposées de la membrane 126. Elles sont chacune formées par un milieu poreux comprenant un catalyseur, typiquement du platine ou un alliage de platine, pour faciliter la réaction.

La plaque anodique 118 délimite avec l'assemblage membrane-électrode 116 un compartiment anodique 120 pour la circulation de l'eau destinée à être électrolysée et la collecte du dioxygène issu de la réaction d'électrolyse. Ce compartiment anodique 120 s'étend le long de la face de la membrane 126 portant l'anode 128a.

Le compartiment anodique 120 contient une matrice poreuse 121. De préférence, comme représenté, la matrice poreuse 121 a une forme sensiblement complémentaire de celle du compartiment anodique 120.

La plaque anodique 118 est formée d'un matériau conducteur électriquement, typiquement du titane.

La plaque cathodique 122 délimite avec l'assemblage membrane-électrode 116 un compartiment cathodique 124 pour la collecte du dihydrogène issu de la réaction d'électrolyse. Ce compartiment cathodique 124 s'étend le long de la face de la membrane 126 portant la cathode 128b.

Le compartiment cathodique 124 contient une matrice poreuse 125. De préférence, comme représenté, la matrice poreuse 125 a une forme sensiblement complémentaire de celle du compartiment cathodique 124.

La plaque cathodique 122 est formée d'un matériau conducteur électriquement, typiquement du titane.

La membrane 126 sépare le dioxygène du dihydrogène produit par l'électrolyse. Elle est disposée entre la plaque anodique 118 et la plaque cathodique 122 de la cellule 105 et isole celles-ci électriquement l'une de l'autre.

L'anode 128a est en contact électrique avec la plaque anodique 118. La cathode 128b est en contact électrique avec la plaque cathodique 122. Lors du fonctionnement de l'électrolyseur 3, il se produit au niveau de l'anode 128a une électrolyse de l'eau sous l'effet de la différence de potentiel appliquée entre les plaques anodique et cathodique 118, 122. Les ions dioxygène ainsi formés cèdent un électron à la plaque anodique, de manière à former du dioxygène, alors que les ions hydrogène migrent au travers de la membrane 126 vers le compartiment cathodique 124, où ils récupèrent des électrons et s'assemblent pour former du dihydrogène

La cellule 105 est empilée avec d'autres cellules similaires, la plaque anodique 118 de chaque cellule étant en contact avec la plaque cathodique 122 de la cellule voisine. Les plaques anodique et cathodique 118, 122 assurent ainsi le transfert des électrons des ions dioxygène collectés dans le compartiment anodique 120 d'une cellule une cellule vers les ions hydrogène collectés dans le compartiment cathodique 124 d'une autre cellule. Les plaques anodique 118 et cathodique 122 de deux cellules voisines de l'empilement sont de préférence venues de matière et forment ensemble une plaque bipolaire.

Les cellules 105 sont raccordées électriquement en série les unes aux autres, de sorte que la tension aux bornes de l'empilement 103 est égale à la somme des tensions aux bornes des cellules 105.

En référence à la Figure 9, le comparateur de tension 107 comprend, pour chaque cellule 105 de l'électrolyseur 103, un dispositif 130 de contrôle de la tension aux bornes de ladite cellule 105. Il comprend en outre dispositif 132 régulateur de tension, agencé de façon à ce que le dispositif de contrôle 130 mesure la tension V aux bornes de la cellule 105, abaissée d'une tension de décalage ΔV fixe.

La tension V est typiquement comprise entre 0,5 et 1,0V, en fonctionnement normal de la cellule 105. La tension de décalage ΔV est la tension aux bornes du dispositif régulateur 132. De préférence, la tension de décalage ΔV est comprise entre 0,3V et 1V.

Le dispositif de contrôle 130 est constitué par un dispositif optique actif, typiquement un optocoupleur. Il comprend une entrée 134, raccordée électriquement à la cellule 105, pour la mesure de sa tension V, et une sortie 136, pour la construction d'une image de la tension mesurée V. L'entrée 134 et la sortie 136 sont isolées électriquement.

L'entrée 134 comprend une diode électroluminescente 138, adaptée pour émettre des photons lorsque la tension à ses bornes est supérieure à une tension seuil Vₘᵢₙ. En fonctionnement normal de la cellule 105, la tension seuil Vₘᵢₙ est supérieure à la différence des tensions V et ΔV, de sorte que la diode électroluminescente 138 n'émet pas de photons. La tension seuil Vₘᵢₙ est typiquement comprise entre 0,8 et 1,2V.

La sortie 136 comprend un phototransistor 140 adapté pour être en configuration fermée, c'est-à-dire raccordant électriquement son collecteur 141A et son émetteur 141B l'un à l'autre, lorsque sa base 141C reçoit des photons, et pour être en configuration ouverte, c'est-à-dire isolant électriquement son collecteur 141A et son émetteur 141B l'un de l'autre, lorsque sa base 141C ne reçoit pas de photons.

Le phototransistor 140 est couplé optiquement à la diode électroluminescente 138. En d'autres termes, la diode électroluminescente 138 et le phototransistor 140 sont agencés de façon à ce que les photons émis par la diode 138 parviennent à la base 141C du phototransistor 140. Le passage du phototransistor 140 de sa configuration ouverte à sa configuration fermée est ainsi commandé par l'état de la diode électroluminescente 138.

Le dispositif régulateur 132 est un dispositif électrique passif. En particulier, le dispositif régulateur 132 est une diode, typiquement une diode Schottky, avantageuse parce que peu coûteuse et donnant une tension de décalage fixe et facilement maîtrisable. La diode est orientée de manière à laisser passer les courants des zones de potentiel haut aux zones de potentiel inférieur. Ainsi, en fonctionnement normal, la tension aux bornes du dispositif régulateur 132, qui est également la tension de décalage ΔV, est égale à la tension seuil de la diode.

Le dispositif régulateur 132 comprend une première borne 142, raccordée électriquement à une borne 144 de l'entrée 134 du dispositif de contrôle 130. La première borne 142 est en liaison électrique directe avec la borne 144, c'est-à-dire qu'il n'y a pas de composant électrique interposé les bornes 142 et 144. L'autre borne 145 de l'entrée 134 du dispositif de contrôle 130 est en liaison électrique directe avec une borne de potentiel bas 147 de la cellule 105.

Le dispositif régulateur 132 comprend également une deuxième borne 146, raccordée électriquement à une borne de potentiel haut 148 de la cellule 105. En d'autres termes, la deuxième borne 146 est raccordée électriquement à la plaque anodique 118 de la cellule 105. Une résistance 150 est intercalée entre la deuxième borne 146 et la borne 148, pour limiter l'intensité du courant traversant le dispositif régulateur 132.

Le dispositif de contrôle 130 mesurant ainsi la tension V de la cellule 105 abaissée de la tension de décalage ΔV, la tension V peut varier sur une plage plus large avant que la tension aux bornes de l'entrée 134 du dispositif de contrôle 130 ne passe au-dessus de la tension seuil Vₘᵢₙ.

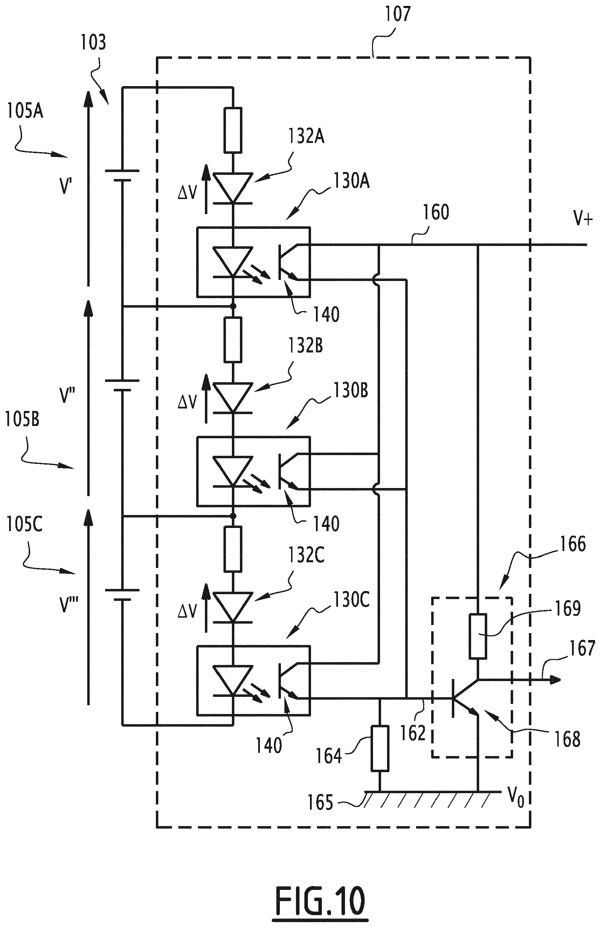

En référence à la Figure 10, les tensions V', V", V'" aux bornes de cellules 105A, 105B, 105C de l'électrolyseur 103 sont chacune mesurée par un dispositif de contrôle, respectivement 130A, 130B, 130C du comparateur de tension 107. De même que pour la cellule 105 représentée sur la Figure 9, un dispositif régulateur, respectivement 132A, 132B, 132C, est fourni pour chaque cellule 105A, 105B, 105C, de façon à ce que le dispositif de contrôle 130A, 130B, 130C associé mesure la tension V', V", V'" abaissée d'une tension de décalage ΔV.

On notera que, pour des raisons de clarté de la Figure, le nombre de cellules de l'électrolyseur 103 représentées à été limité à trois, mais que ce nombre est nullement limitatif, l'électrolyseur 103 pouvant comprendre plus ou moins de trois cellules électrochimiques. De préférence, l'électrolyseur 103 comprend un grand nombre de cellules électrochimiques, par exemple supérieure à cent.

La tension seuil Vₘᵢₙ est de préférence sensiblement la même pour tous les dispositifs de contrôle 130A, 130B, 130C, et la tension de décalage ΔV est de préférence sensiblement la même pour tous les dispositifs régulateurs 132A, 132B, 132C. La tension maximale de chaque cellule 105A, 105B, 105C au délà de laquelle le phototransistor 140 associé se ferme est donc sensiblement la même pour toutes les cellules 105A, 105B, 105C.

Les sorties 136 des dispositifs de contrôle 130A, 130B, 130C sont raccordées en parallèle les unes aux autres, entre une ligne 160 de potentiel positif V⁺ (typiquement 5 volts) et une ligne intermédiaire 162. Une résistance 164 est interposée électriquement entre la ligne 162 et une ligne 165 de potentiel de référence V₀.

Ainsi, tant que tous les phototransistors 140 des dispositifs de contrôle 130A, 130B, 130C sont ouverts, le potentiel de la ligne intermédiaire 162 est égal au potentiel de référence V₀. Si en revanche le potentiel de la ligne intermédiaire 162 passe au potentiel positif V⁺, c'est le signe que l'un des phototransistors 140 s'est fermé, et donc qu'une puissance excessive est appliquée à l'électrolyseur 103.

Toujours en référence à la Figure 10, le comparateur de tension 107 comprend également un inverseur de tension 166 interposé électriquement entre la ligne intermédiaire et une ligne de sortie 167, pour fournir sur la ligne de sortie 167 une tension inversée par rapport à la tension de la ligne intermédiaire 162.

A cet effet, l'inverseur de tension 166 comprend un transistor 168 dont la base est raccordée électriquement à la ligne intermédiaire 162, l'émetteur est raccordé électriquement à la ligne 165 et le collecteur est raccordé électriquement à la ligne de sortie 167 et, via une résistance 169, à la ligne 160. Ainsi, lorsque la ligne intermédiaire 162 est au potentiel de référence V₀, le transistor 168 est ouvert et la ligne de sortie 167 est donc au potentiel positif V⁺, et lorsque la ligne intermédiaire 162 est au potentiel positif V⁺, le transistor 168 est fermé et la ligne de sortie 167 est donc au potentiel de référence V₀.

De retour à la Figure 7, le convertisseur 109 est adapté pour mettre l'énergie électrique produite par la source 113 en forme pour sa consommation par le système 100. Il comprend une entrée 170 de courant de courant alternatif raccordée électriquement aux bornes de la source 113, et une sortie 172 de courant continu raccordée électriquement aux bornes de l'électrolyseur 103. Le convertisseur 109 est dans l'exemple représenté un convertisseur alternatif/continu. En variante, le convertisseur 109 est un convertisseur continu/continu.

Le convertisseur 109 est piloté par le module de commande 111.

Le module de commande 111 comprend un générateur de consigne de pilotage 174 et un organe 176 de transmission de la consigne de pilotage au convertisseur 109.

Le générateur de consigne de pilotage 174 est programmé pour générer une consigne de pilotage du convertisseur 109, par exemple de type à modulation de largeur d'impulsion, adaptée pour que le courant sortant du convertisseur 109 par sa sortie 172 soit adapté à l'électrolyseur 103. De tels générateurs de consigne de pilotage sont connus de l'homme du métier.

L'organe de transmission 176 comprend une ligne électrique 180 raccordant électriquement une borne 182 de sortie de la consigne de pilotage du générateur 174 à une borne 184 de réception de la consigne de pilotage par le convertisseur 109. L'organe de transmission 176 comprend en outre un interrupteur commandé 186 pour sélectivement ouvrir et fermer la ligne électrique 180. L'interrupteur commandé 186 est typiquement un transistor, par exemple un phototransistor ou un transistor à effet de champ à grille métal-oxyde.

Le comparateur de tension 107 est adapté pour transmettre un signal de commande de l'interrupteur commandé 186 à l'organe de transmission 176, ledit signal consistant en une consigne de transmission de la consigne de pilotage lorsque la tension aux bornes de chaque cellule 105 est inférieure à la tension Vₘᵢₙ+ΔV, et en une consigne de blocage de la consigne de pilotage dès que l'une des tensions aux bornes des cellules 105 est supérieure ou égale à la tension Vₘᵢₙ+ΔV, de sorte que l'organe de transmission 176 transmette la consigne de pilotage au convertisseur 109 lorsqu'il reçoit la consigne de transmission, et bloque la consigne de pilotage lorsqu'il reçoit la consigne de blocage.

A cet effet, la sortie 167 du comparateur de tension 107 est raccordée électriquement à l'organe de transmission 176.

En particulier, dans le cas où l'interrupteur commandé 186 est un transistor à effet de champ à grille métal-oxyde, la sortie 162 du comparateur de tension 107 est raccordée électriquement à la grille du transistor. Dans le cas où l'interrupteur commandé 186 est un phototransistor, la sortie 162 est raccordée électriquement à une diode électroluminescente (non représentée) adaptée pour émettre des photons lorsque la tension à ses bornes est supérieure à une tension seuil inférieure au potentiel positif V⁺, la diode électroluminescente étant couplée optiquement au phototransistor.

Ainsi, lorsque la sortie 167 est au potentiel positif V⁺, l'interrupteur 186 est fermé et la consigne de pilotage est transmise au convertisseur 109 et, lorsque la sortie 162 est au potentiel de référence V₀, l'interrupteur 186 est ouvert et la consigne de pilotage n'est pas transmise au convertisseur 109.

Le signal transmis par la sortie 162 à l'organe de transmission 176 consiste donc en une alternance de créneaux au potentiel positif V⁺ et de créneaux au potentiel de référence V₀, chaque créneau au potentiel positif V⁺ constituant une consigne de transmission de la consigne de pilotage, et chaque créneau au potentiel de référence V₀ constituant une consigne de blocage de la consigne de pilotage.

La source 113 est par exemple une centrale ou un réseau électrique.

Un procédé de pilotage du système électrique 100 va maintenant être décrit, en référence à la Figure 7.

Le système électrique 100 est tout d'abord mis en fonctionnement. A cet effet, l'électrolyseur 103 est alimenté en eau, et une consigne de pilotage est générée par le générateur de consigne 174 pour que le courant de sortie du convertisseur 109 soit adapté à l'électrolyseur 103. Sous l'effet du courant électrique fourni par la source 113, une différence de potentiel inférieure à Vₘᵢₙ+ΔV s'établit entre les bornes de chaque cellule 105. Tous les phototransistors 136 du comparateur de tension 107 sont alors ouverts, de sorte que le signal de sortie du comparateur de tension 107 consiste en la consigne de transmission. L'interrupteur 186 est donc également fermé, de sorte que la consigne de pilotage est transmise au convertisseur 109, qui est ainsi en fonctionnement.

A un instant quelconque, la tension aux bornes de l'une des cellules 105 de l'électrolyseur 103 passe au-dessus de la valeur Vₘᵢₙ+ΔV. Cette hausse de tension est détectée grâce à la fermeture du phototransistor 140 associé à ladite cellule 105, ce qui a pour effet de basculer la sortie 167 du comparateur de tension 107 au potentiel de référence V₀.

Le signal de sortie du comparateur de tension 107 consiste alors en la consigne de blocage. En conséquence, l'interrupteur 186 s'ouvre, et la consigne de pilotage cesse d'être transmise au convertisseur 109, qui s'arrête.

Le convertisseur 109 étant arrêté, il n'y a plus d'énergie transmise à l'électrolyseur 103. Celui-ci continuant néanmoins d'être alimenté en eau, la tension aux bornes des cellules 105 baisse de sorte que toutes les valeurs de tension reviennent en-dessous de la valeur Vₘᵢₙ+ΔV. Cette baisse de tension est détectée grâce à l'ouverture du phototransistor 140 qui s'était fermé, ce qui a pour effet de faire revenir la sortie 167 du comparateur de tension 107 au potentiel positif V⁺. L'interrupteur 186 se referme, et la consigne de pilotage est à nouveau transmise au convertisseur 109, qui redémarre.

On notera que les tensions aux bornes des cellules 105 sont susceptibles de baisser très rapidement après l'arrêt du convertisseur 109, de sorte que l'arrêt du convertisseur 109 ne dure généralement qu'une fraction de seconde. La source 113 ne voit ainsi pas de coupure de sa charge par le système électrique 100, mais simplement une limitation de la puissance électrique que le système électrique 100 est susceptible d'absorber.

Grâce à ce deuxième mode de réalisation, l'électrolyseur 103 peut être exploité au maximum de ses capacités, sans jamais entrer dans une zone de fonctionnement dans laquelle la dégradation des cellules électrochimiques 105 serait accélérée.

De plus, le système électrique 100 est simple et peu coûteux à produire.

## Revendications

1. Système électrique (1, 100), comprenant :
- un empilement (3, 103) de cellules électrochimiques (5, 5A, 5B, 5C, 5D, 5E, 5F, 105, 105A, 105B, 105C) raccordées électriquement en série les unes aux autres, de sorte que la tension aux bornes de l'empilement (3, 103) est égale à la somme des tensions aux bornes des cellules électrochimiques (5, 5A, 5B, 5C, 5D, 5E, 5F, 105, 105A, 105B, 105C),
- un convertisseur électrique (9, 109) raccordé électriquement aux bornes de l'empilement (3, 103),
- un comparateur de tension (7, 107) pour comparer la tension aux bornes d'au moins un groupe d'au moins une cellule électrochimique (5, 105) de l'empilement (3, 103) à une tension seuil, et
- un module (11, 111) de commande du convertisseur (9, 109),
**caractérisé en ce que** le module de commande (11, 111) comprend un générateur (74, 174) d'une consigne de pilotage du convertisseur (9, 109) et un organe (76, 176) de transmission de la consigne de pilotage au convertisseur (9, 109), le comparateur de tension (7, 107) étant adapté pour transmettre un signal à l'organe de transmission (76, 176), ledit signal consistant en une première consigne parmi une consigne de transmission et une consigne de blocage de la consigne de pilotage lorsque la tension comparée est supérieure à la tension seuil, et en la deuxième consigne parmi les consignes de transmission et de blocage de la consigne de pilotage lorsque la tension comparée est inférieure ou égale à la tension seuil, l'organe de transmission (76, 176) étant adapté pour transmettre la consigne de pilotage au convertisseur (9, 109) lorsqu'il reçoit la consigne de transmission, et pour bloquer la consigne de pilotage lorsqu'il reçoit la consigne de blocage.

2. Système électrique (1, 100) selon la revendication 1, dans lequel chaque cellule électrochimique (5, 5A, 5B, 5C, 5D, 5E, 5F, 105, 105A, 105B, 105C) de l'empilement (3, 103) appartient à un groupe dont la tension est comparée à une tension seuil par le comparateur de tension (7, 107).

3. Système électrique (1, 100) selon la revendication 1 ou 2, dans lequel le comparateur de tension (7, 107) est adapté pour comparer la tension aux bornes de chaque groupe d'une pluralité de groupes d'au moins une cellule électrochimique (5, 5A, 5B, 5C, 5D, 5E, 5F, 105, 105A, 105B, 105C) à une tension seuil associée audit groupe, et pour transmettre à l'organe de transmission (76, 176) la deuxième consigne dès que l'une des tensions comparées est inférieure ou égale à la tension seuil associée.

4. Système électrique (1, 100) selon l'une quelconque des revendications précédentes, dans lequel l'organe de transmission (76, 176) comprend un interrupteur commandé (86, 186) piloté par le signal transmis par le comparateur de tension (7, 107), l'interrupteur commandé (86, 186) étant en particulier un transistor, par exemple un phototransistor ou un transistor à effet de champ à grille métal-oxyde.

5. Système électrique (1, 100) selon l'une quelconque des revendications précédentes, dans lequel le comparateur de tension (7, 107) est adapté pour comparer individuellement la tension aux bornes de chaque cellule électrochimique (5, 5A, 5B, 5C, 5D, 5E, 5F, 105, 105A, 105B, 105C) de l'empilement (3, 103) à une tension seuil associée à la cellule électrochimique (5, 5A, 5B, 5C, 5D, 5E, 5F, 105, 105A, 105B, 105C), et pour transmettre à l'organe de transmission (76, 176) la deuxième consigne dès que l'une des tensions comparées est inférieure ou égale à la tension seuil associée.

6. Système électrique (100) selon la revendication 5, dans lequel le comparateur de tension (107) comprend, pour chaque cellule électrochimique (105, 105A, 105B, 105C) de l'empilement (103), un dispositif (130, 130A, 130B, 130C) de contrôle de la tension aux bornes de ladite cellule (105, 105A, 105B, 105C), et un dispositif régulateur de tension (132A, 132B, 132C), raccordé électriquement à ladite cellule (105, 105A, 105B, 105C) de façon à ce que le dispositif de contrôle (130A, 130B, 130C) mesure la tension aux bornes de la cellule (105, 105A, 105B, 105C), abaissée d'une tension de décalage aux bornes du dispositif régulateur (132, 132A, 132B, 132C).

7. Système électrique (1) selon la revendication 5, dans lequel le comparateur de tension (7) comprend, pour chaque cellule électrochimique (5, 5A, 5B, 5C, 5D, 5E, 5F) de l'empilement (3), un dispositif (30, 30C, 30D, 30E, 30F) de contrôle de la tension aux bornes de ladite cellule (5, 5A, 5B, 5C, 5D, 5E, 5F), et un dispositif régulateur de tension (32, 32C, 32D, 32E, 32F), raccordé électriquement à ladite cellule (5, 5A, 5B, 5C, 5D, 5E, 5F) de façon à ce que le dispositif de contrôle (30, 30C, 30D, 30E, 30F) mesure la tension aux bornes de la cellule (5, 5A, 5B, 5C, 5D, 5E, 5F), augmentée d'une tension de décalage aux bornes du dispositif régulateur (32, 32C, 32D, 32E, 32F).

8. Système électrique (1) selon l'une quelconque des revendications précédentes, comprenant un capteur de tension (90) pour mesurer la tension aux bornes de l'empilement (3) et un module (92) de détection d'un dysfonctionnement de l'empilement (3), le module de détection (92) ayant pour entrées la tension mesurée par le capteur de tension (90) et le signal transmis par le comparateur de tension (7) à l'organe de transmission (76).

9. Système électrique (1) selon la revendication 8, dans lequel le module de détection (92) est programmé pour comparer la tension mesurée à une tension maximale, et pour émettre un signal de dysfonctionnement de l'empilement (3) lorsque la tension mesurée est supérieure à la tension maximale et le signal transmis par le comparateur de tension (7) à l'organe de transmission (76) consiste en la consigne de blocage.

10. Système électrique (1) selon l'une quelconque des revendications 1 à 7, comprenant un capteur de courant (94) pour mesurer l'intensité du courant sortant de l'empilement (3) et un module (96) de détection d'un dysfonctionnement de l'empilement (3), le module de détection (96) ayant pour entrées l'intensité mesurée par le capteur de courant (94) et le signal transmis par le comparateur de tension (7) à l'organe de transmission (76).

11. Système électrique (1) selon la revendication 10, dans lequel le module de détection (96) est programmé pour comparer l'intensité mesurée à une intensité minimale, et pour émettre un signal de dysfonctionnement de l'empilement (3) lorsque l'intensité mesurée est inférieure à l'intensité minimale et le signal transmis par le comparateur de tension (7) à l'organe de transmission (76) consiste en la consigne de blocage.

12. Procédé de pilotage d'un système électrique (1) selon l'une quelconque des revendications précédentes, comprenant les étapes successives suivantes :
- comparaison de la tension aux bornes d'au moins un groupe d'au moins une cellule électrochimique (5, 5A, 5B, 5C, 5D, 5E, 5F) avec une tension seuil, la tension comparée étant supérieure à la tension seuil, le convertisseur (9) étant en fonctionnement,
- détection de la baisse de la tension comparée à une valeur inférieure à celle de la tension seuil,
- arrêt du convertisseur (9),
- détection de l'augmentation de la tension comparée à une valeur supérieure à celle de la tension seuil, et
- remise en marche du convertisseur (9).

13. Procédé de pilotage d'un système électrique (100) selon l'une quelconque des revendications 1 à 6, comprenant les étapes successives suivantes :
- comparaison de la tension aux bornes d'au moins un groupe d'au moins une cellule électrochimique (105, 105A, 105B, 105C) avec une tension seuil, la tension comparée étant inférieure à la tension seuil, le convertisseur (109) étant en fonctionnement,
- détection de la hausse de la tension comparée à une valeur supérieure à celle de la tension seuil,
- arrêt du convertisseur (109),
- détection de la baisse de la tension comparée à une valeur inférieure à celle de la tension seuil, et
- remise en marche du convertisseur (109).

## Patentansprüche

1. Elektrisches System (1, 100), umfassend:
- einen Stapel (3, 103) elektrochemischer Zellen (5, 5A, 5B, 5C, 5D, 5E, 5F, 105, 105A, 105B, 105C), die elektrisch zueinander in Reihe geschaltet sind, derart, dass die Spannung an den Klemmen des Stapels (3, 103) gleich der Summe der Spannungen an den Klemmen der elektrochemischen Zellen (5, 5A, 5B, 5C, 5D, 5E, 5F, 105, 105A, 105B, 105C) ist,
- einen elektrischen Wandler (9, 109), der elektrisch an die Klemmen des Stapels (3, 103) angeschlossen ist,
- einen Spannungsvergleicher (7, 107) zum Vergleichen der Spannung an Klemmen mindestens einer Gruppe aus mindestens einer elektrochemischen Zelle (5, 105) des Stapels (3, 103) mit einer Schwellenspannung, und
- ein Modul (11, 111) zur Steuerung des Wandlers (9, 109),
**dadurch gekennzeichnet, dass** das Steuermodul (11, 111) einen Generator (74, 174) für einen Steuersollwert für den Wandler (9, 109) und ein Element (76, 176) zur Übertragung des Steuersollwerts an den Wandler (9, 109) umfasst, wobei der Spannungsvergleicher (7, 107) geeignet ist, ein Signal an das Übertragungselement (76, 176) zu geben, wobei das Signal aus einem ersten Sollwert, ausgewählt aus einem Übertragungssollwert und einem Sollwert zum Sperren des Steuersollwerts, wenn die verglichene Spannung größer als die Schwellenspannung ist, und dem zweiten Sollwert, ausgewählt aus dem Übertragungssollwert und dem Sollwert des Sperrens des Steuersollwerts, wenn die verglichene Spannung kleiner als die oder gleich der Schwellenspannung ist, besteht, wobei das Übertragungselement (76, 176) ausgebildet ist, den Steuersollwert an den Wandler (9, 109) zu übertragen, wenn es den Übertragungssollwert empfängt, und den Steuersollwert zu sperren, wenn es den Sollwert zum Sperren erhält.

2. Elektrisches System (1, 100) nach Anspruch 1, bei dem jede elektrochemische Zelle (5, 5A, 5B, 5C, 5D, 5E, 5F, 105, 105A, 105B, 105C) des Stapels (3, 103) zu einer Gruppe gehört, deren Spannung von dem Spannungsvergleicher (7, 107) mit einer Schwellenspannung verglichen wird.

3. Elektrisches System (1, 100) nach Anspruch 1 oder 2, bei dem der Spannungsvergleicher (7, 107) angepasst ist, die Spannung an den Klemmen jeder Gruppe einer Mehrzahl von Gruppen mindestens einer elektrochemischen Zelle (5, 5A, 5B, 5C, 5D, 5E, 5F, 105, 105A, 105B, 105C) mit einer der Gruppe zugeordneten Schwellenspannung zu vergleichen und dem Übertragungselement (76, 176) den zweiten Sollwert zu übertragen, sobald eine der verglichenen Spannungen kleiner als die oder gleich der zugeordneten Schwellenspannung ist.

4. Elektrisches System (1, 100) nach einem beliebigen der vorhergehenden Ansprüche, bei dem das Übertragungselement (76, 176) einen gesteuerten Unterbrecher (86, 186) umfasst, der durch das von dem Spannungsvergleicher (7, 107) abgegebene Signal gesteuert wird, wobei der gesteuerte Unterbrecher (86, 186) insbesondere ein Transistor, beispielsweise ein Fototransistor oder ein MOS Feldeffekttransistor ist.

5. Elektrisches System (1, 100) nach einem beliebigen der vorhergehenden Ansprüche, bei dem der Spannungsvergleicher (7, 107) angepasst ist, individuell die Spannung an den Klemmen jeder elektrochemischen Zelle (5, 5A, 5B, 5C, 5D, 5E, 5F, 105, 105A, 105B, 105C) des Stapels (3, 103) mit einer der elektrochemischen Zelle (5, 5A, 5B, 5C, 5D, 5E, 5F, 105, 105A, 105B, 105C) zugeordneten Spannung zu vergleichen und den zweiten Sollwert an das Übertragungselement (76, 176) abzugeben, sobald eine der verglichenen Spannungen kleiner als die oder gleich der zugeordneten Schwellenspannung ist.

6. Elektrisches System (100) nach Anspruch 5, bei dem der Spannungsvergleicher (107) für jede elektrochemische Zelle (105, 105A, 105B, 105C) des Stapels (103) eine Vorrichtung (130, 130A, 130B, 130C) zur Überwachung der Spannung an den Klemmen der Zelle (105, 105A, 105B, 105C) und eine Spannungsregelvorrichtung (132A, 132B, 132C) aufweist, die elektrisch mit der Zelle (105, 105A, 105B, 105C) verbunden ist, derart, dass die Überwachungsvorrichtung (130A, 130B, 130C) die Spannung an den Klemmen der Zelle (105, 105A, 105B, 105C) misst, verringert um eine Offset-Spannung an den Klemmen der Regelvorrichtung (132, 132A, 132B, 132C).

7. Elektrisches System (1) nach Anspruch 5, bei dem der Spannungsvergleicher (7) für jede elektrochemische Zelle (5, 5A, 5B, 5C, 5D, 5E, 5F) des Stapels (3) eine Vorrichtung (30, 30C, 30D, 30E, 30F) zur Überwachung der Spannung an den Klemmen der Zelle (5, 5A, 5B, 5C, 5D, 5E, 5F) und eine Spannungsregelvorrichtung (32, 32C, 32D, 32E, 32F) aufweist, die elektrisch mit der Zelle (5, 5A, 5B, 5C, 5D, 5E, 5F) derart verbunden ist, dass die Überwachungsvorrichtung (30, 30C, 30D, 30E, 30F) die Spannung an den Klemmen der Zelle (5, 5A, 5B, 5C, 5D, 5E, 5F) misst, erhöht um eine Offset-Spannung an den Klemmen der Regelvorrichtung (32, 32C, 32D, 32E, 32F).

8. Elektrisches System (1) nach einem beliebigen der vorhergehenden Ansprüche, einen Spannungssensor (90) zum Messen der Spannung an den Klemmen des Stapels (3) und ein Modul (92) zum Erfassen einer Fehlfunktion des Stapels (3) umfasst, wobei das Erfassungsmodul (92) als Eingangsgrößen die von dem Spannungssensor (90) gemessene Spannung und das von dem Spannungsvergleicher (7) an das Übertragungselement (76) gelieferte Signal aufweist.

9. Elektrisches System (1) nach Anspruch 8, bei dem das Erfassungsmodul (92) so programmiert ist, dass die gemessene Spannung mit einer maximalen Spannung verglichen wird und dass ein Signal bezüglich einer Funktionsstörung des Stapels (3) gesendet wird, wenn die gemessene Spannung größer als die maximale Spannung ist und das von dem Spannungsvergleicher (7) dem Übertragungselement (76) gelieferte Signal der Sperrsollwert ist.

10. Elektrisches System (1) nach einem beliebigen der Ansprüche 1 bis 7, einen Stromsensor (94) zum Messen der Stärke des von dem Stapel (3) gelieferten Stroms und ein Modul (96) zum Erfassen einer Funktionsstörung des Stapels (3) umfassend, wobei das Erfassungsmodul (96) als Eingangsgrößen die von dem Stromsensor (94) gemessene Stromstärke und das von dem Spannungsvergleicher (7) an das Übertragungselement (76) gelieferte Signal aufweist.

11. Elektrisches System (1) nach Anspruch 10, bei dem das Erfassungsmodul (96) so programmiert ist, dass es die gemessene Stromstärke mit einer minimalen Stromstärke vergleicht und ein Signal bezüglich einer Funktionsstörung des Stapels (3) sendet, wenn die gemessene Stromstärke kleiner als die minimale Stromstärke ist und das Signal, das von dem Spannungsvergleicher (7) an das Übertragungselement (76) geliefert wird, der Sperrsollwert ist.

12. Verfahren zum Steuern eines elektrischen Systems (1) nach einem beliebigen der vorhergehenden Ansprüche, die folgenden aufeinanderfolgenden Schritte umfassend:
- Vergleichen der Spannung an den Klemmen mindestens einer Gruppe mindestens einer elektrochemischen Zelle (5, 5A, 5B, 5C, 5D, 5E, 5F) mit einer Schwellenspannung, wobei, wenn die verglichene Spannung größer als die Schwellenspannung ist, der Wandler (9) in Funktion ist,
- Erfassen des Absenkens der verglichenen Spannung auf einen Wert kleiner als der der Schwellenspannung,
- Anhalten des Wandlers (9),
- Erfassen der Erhöhung der verglichenen Spannung auf einen Wert größer als der der Schwellenspannung, und
- Wiederinbetriebnahme des Wandlers (9).

13. Verfahren zum Steuern eines elektrischen Systems (100) nach einem beliebigen der Ansprüche 1 bis 6, die folgenden aufeinanderfolgenden Schritte umfassend:
- Vergleichen der Spannung an den Klemmen mindestens einer Gruppe mindestens einer elektrochemischen Zelle (105,105A, 105B, 105C) mit einer Schwellenspannung, wobei, wenn die verglichene Spannung kleiner ist als die Schwellenspannung, der Wandler (109) in Funktion ist,
- Erfassen der Erhöhung der verglichenen Spannung auf einen Wert größer als der der Spannungsschwelle,
- Anhalten des Wandlers (109),
- Erfassen der Verringerung der verglichenen Spannung auf einen Wert kleiner als der der Spannungsschwelle, und
- Wiederinbetriebnahme des Wandlers (109).

## Claims

1. An electric system (1, 100), comprising:
- a stack (3, 103) of electrochemical cells (5, 5A, 5B, 5C, 5D, 5E, 5F, 105, 105A, 105B, 105C) electrically connected in series to each other so that the voltage on the terminals of the stack (3, 103) is equal to the sum of the voltages on the terminals of the electrochemical cells (5, 5A, 5B, 5C, 5D, 5E, 5F, 105, 105A, 105B, 105C),
- an electric converter (9, 109) electrically connected to the terminals of the stack (3, 103),
- a voltage comparator (7, 107) for comparing the voltage on the terminals of at least one group of at least one electrochemical cell (5, 105) of the stack (3, 103) at a threshold voltage, and
- a module (11, 111) for controlling the converter (9, 109),
**characterised in that** the control module (11, 111) comprises a generator (74, 174) of a control set value of the converter (9, 109) and a transmission unit (76, 176) of the control set value to the converter (9, 109), the voltage comparator (7, 107) being adapted for transmitting a signal to the transmission unit (76, 176), said signal consisting in a first set value from among a transmission set value and a set value for blocking the control set value when the compared voltage is greater than the threshold voltage, and in the second set value from among the transmission and blocking set values for the control set value when the compared voltage is less than or greater than the threshold voltage, the transmission unit (76, 176) being adapted for transmitting the control set value to the converter (9, 109) when it receives the transmission set value, and for blocking the control set value when it receives the blocking set value.

2. The electric system (1, 100) according to claim 1, wherein each electrochemical cell (5, 5A, 5B, 5C, 5D, 5E, 5F, 105, 105A, 105B, 105C) of the stack (3, 103) belongs to a group for which the voltage is compared with a threshold voltage by the voltage comparator (7, 107).

3. The electric system (1, 100) according to claim 1 or 2, wherein the voltage comparator (7, 107) is adapted for comparing the voltage on the terminals of each group of a plurality of groups of at least one electrochemical cell (5, 5A, 5B, 5C, 5D, 5E, 5F, 105, 105A, 105B, 105C) with a threshold voltage associated with said group, and for transmitting to the transmission unit (76, 176) the second set value as soon as one of the compared voltages is less than or equal to the associated threshold voltage.

4. The electric system (1, 100) according to any of the preceding claims, wherein the transmission unit (76, 176) comprises a controlled switch (86, 186) controlled by the signal transmitted by the voltage comparator (7, 107), the controlled switch (86, 186) being in particular a transistor, for example a phototransistor or a field effect transistor with a metal-oxide gate.

5. The electric system (1, 100) according to any of the preceding claims, wherein the voltage comparator (7, 107) is adapted for individually comparing the voltage to the terminals of each electrochemical cell (5, 5A, 5B, 5C, 5D, 5E, 5F, 105, 105A, 105B, 105C) of the stack (3, 103) with a threshold voltage associated with the electrochemical cell (5, 5A, 5B, 5C, 5D, 5E, 5F, 105, 105A, 105B, 105C), and for transmitting to the transmission unit (76, 176) the second set value as soon as one of the compared voltages is less than or equal to the associated threshold voltage.

6. The electric system (100) according to claim 5, wherein the voltage comparator (107) comprises, for each electrochemical cell (105, 105A, 105B, 105C) of the stack (103), a device (130, 130A, 130B, 130C) for controlling the voltage on the terminals of said cell (105, 105A, 105B, 105C), and a voltage-regulating device (132A, 132B, 132C), electrically connected to said cell (105, 105A, 105B, 105C) so that the control device (130A, 130B, 130C) measures the voltage on the terminals of the cell (105, 105A, 105B, 105C), lowered by a shift voltage on the terminals of the regulating device (132, 132A, 132B, 132C).

7. The electric system (1) according to claim 5, wherein the voltage comparator (7) comprises, for each electrochemical cell (5, 5A, 5B, 5C, 5D, 5E, 5F) of the stack (3), a device (30, 30C, 30D, 30E, 30F) for controlling the voltage on the terminals of said cell (5, 5A, 5B, 5C, 5D, 5E, 5F), and a voltage-regulating device (32, 32C, 32D, 32E, 32F), electrically connected to said cell (5, 5A, 5B, 5C, 5D, 5E, 5F) so that the control device (30, 30C, 30D, 30E, 30F) measures the voltage on the terminals of the cell (5, 5A, 5B, 5C, 5D, 5E, 5F), increased by a shift voltage on the terminals of the regulating device (32, 32C, 32D, 32E, 32F).

8. The electric system (1) according to any of the preceding claims, comprising a voltage sensor (90) for measuring the voltage on the terminals of the stack (3) and a module (92) for detecting a malfunction of the stack (3), the detection module (92) having as inputs the voltage measured by the voltage sensor (90) and the signal transmitted by the voltage comparator (7) to the transmission unit (76).

9. The electric system (1) according to claim 8, wherein the detection module (92) is programmed for comparing the measured voltage to a maximum voltage, and for emitting a malfunction signal of the stack (3) when the measured voltage is greater than the maximum voltage and the signal transmitted by the voltage comparator (7) to the transmission unit (76) consists in the blocking set value.

10. The electric system (1) according to any of claims 1 to 7, comprising a current sensor (94) for measuring the intensity of the current leaving the stack (3) and a module (96) for detecting a malfunction of the stack (3), the detection module (96) having as inputs the intensity measured by the current sensor (94) and the signal transmitted by the voltage comparator (7) to the transmission unit (76).

11. The electric system (1) according to claim 10, wherein the detection module (96) is programmed for comparing the measured intensity to a minimum intensity, and for emitting a malfunction signal of the stack (3) when the measured intensity is less than the minimum intensity and the signal transmitted by the voltage comparator (7) to the transmission unit (76) consists in the blocking set value.

12. A method for controlling an electric system (1) according to any of the preceding claims, comprising the following successive steps:
- comparing the voltage with the terminals of at least one group of at least one electrochemical cell (5, 5A, 5B, 5C, 5D, 5E, 5F) with a threshold voltage, the compared voltage being greater than the threshold voltage, the converter (9) being in operation,
- detecting the drop in the compared voltage to a value of less than that of the threshold voltage,
- stopping the converter (9),
- detection of the increase in the voltage compared with a value greater than that of the threshold voltage, and
- restarting the converter (9).

13. The method for controlling an electric system (100) according to any of claims 1 to 6, comprising the following successive steps:
- comparing the voltage on the terminals of at least one group of at least one electrochemical cell (105, 105A, 105B, 105C) with a threshold voltage, the compared voltage being less than the threshold voltage, the converter (109) being in operation,
- detecting the rise in the voltage compared with a value greater than that of the threshold voltage,
- stopping the converter (109),
- detecting the drop in the voltage compared with a value less than that of the threshold voltage, and
- restarting the converter (109).
